# EUROPEAN PATENT SPECIFICATION

(11) **EP 0 413 123 B1**
(45) Date of publication and mention of the grant of the patent: **18.01.1995**
(21) Application number: 90112834.8
(22) Date of filing: 05.07.1990
(51) Int. Cl.: H04L 12/44, H04L 12/64

(54) **Method of transmitting data over an optical star network, and station and optical star network operating according to the same**
Verfahren zur Datenübertragung über ein optisches Sternnetz, sowie nach diesem Verfahren arbeitende Station und optisches Sternnetz
Procédé de transmission de données sur un réseau optique en étoile, et une station et un réseau optique en étoile opérant selon ce procédé

(30) Priority: 06.07.1989 IT 2111289
(43) Date of publication of application: 20.02.1991
(73) Proprietor: ALCATEL N.V., NL-1077 XX Amsterdam (NL)
(72) Inventor: De Cristofaris, Gianfranco, I-0040 Pomezia (IT); D'Ignazio, Franco, I-0040 Pomezia (IT)
(74) Representative: Brose, Gerhard, Dipl.-Ing.

(56) References cited:
- EP-A- 0 255 442
- Ninth International Conference on Computer Communication October 1988, NORTH HOLLAND-AMSTERDAM (NL) pages 373 - 378; S.TREVES: "BROADBAND LOCAL AND METROPOLITAN AREA NETWORKS IN AN IBCN ENVIRONMENT"

## Description

The present invention relates to a method of transmitting data over an optical star network according to the preamble of claim 1, and to a station and a network operating according to the same.

As it is known,in the communications management in a network,where there are several transmitting stations,it is important to determine the access priorities of each station to the network itself,and then to the resources thereof,so as to avoid collision between the informative packets generated by the various stations.

Relatively to UCOL networks (Ultra-wideband Coherent Optical Local networks), such a problem is particularly prominent due to their particular characteristics concerning topology, technical features and types of offered services.

Indeed,a UCOL network is configured as a passive star where each station is connected with its star center via two dedicated optical fibres.One fibre serves for transmission from the station to the star center and the other one for reception.

Each optical fibre is assimilable to a multiple transmission channel.

The particular kind of optical fibre link using the coherent optics technology,allows that different channels be multiplexed through frequency division and used for several transmissions along the same fibre, thus optimizing the link resources.

As concerns the management of the access of each station to the network,the present access protocols do not fit with a UCOL network.Moreover,although the access protocol systems using the priority concept are already available,at the present state of the art they appear to be intrinsecally very complicated as to frame structure.For such reason they cannot satisfy the functional characteristics of a UCOL network and cannot optimize the resources therein contained.

This is due to the fact that the trend of the ideal management of access disputes to network resources, during the transmission of the various data coming from the various stations, is not well defined in the prior art.

The article by S.Treves "Broadband Local and Metropolitan Area Networks in a IBCN Environment", Ninth International Conference on Computer Communication, October 1988, North Holland-Amsterdam (NL), pag. 373-378, deals with UCOL networks exhaustively and particularly proposes a protocol for managing asynchronous traffic in a UCOL network based on a frame structure comprising:
a) implicitly a first part basically containing information related to frame beginning,
b) a second part subdivided into a number of subparts equal to the maximum number of stations of the network each of which basically containing information corresponding to the status and the priority of an access queue of a different station,
c) a third part basically containing the informative content of such data to be transmitted.

Therefore the object of the present invention is to provide a method of transmitting data over an optical star network able to manage the different kinds of traffic, particularly at least synchronous and packet traffic, simultaneously and according to their characteristics, and correspondingly a station and an optical star network able to operate according to the same.

This object is achieved by the method according to claim 1, the station according to claim 7 and the optical star network according to claim 8; further advantageous features of the present invention are set forth in dependent claims.

From an operative point of view, such a network can operate both with synchronous and asynchronous traffic, by using the same channel (reference is made to packet and synchronous traffic as an example).

Moreover, with such a network it is possible to avoid the collision between data flows, being able to provide for the errors due to information on the measurement of distance between the station and the star center,and it is possible to prepare the informations for transmission, knowing a transmission advance time which depends on the information propagation delay along the optical channel in addition to the measured distance between the station and the star-center.

Finally with such a network it is possible to classify, thanks to priority classes, the kind of traffic to be managed.

The invention will now be described in detail next herein, by way of an example, with reference to the attached drawings, wherein:

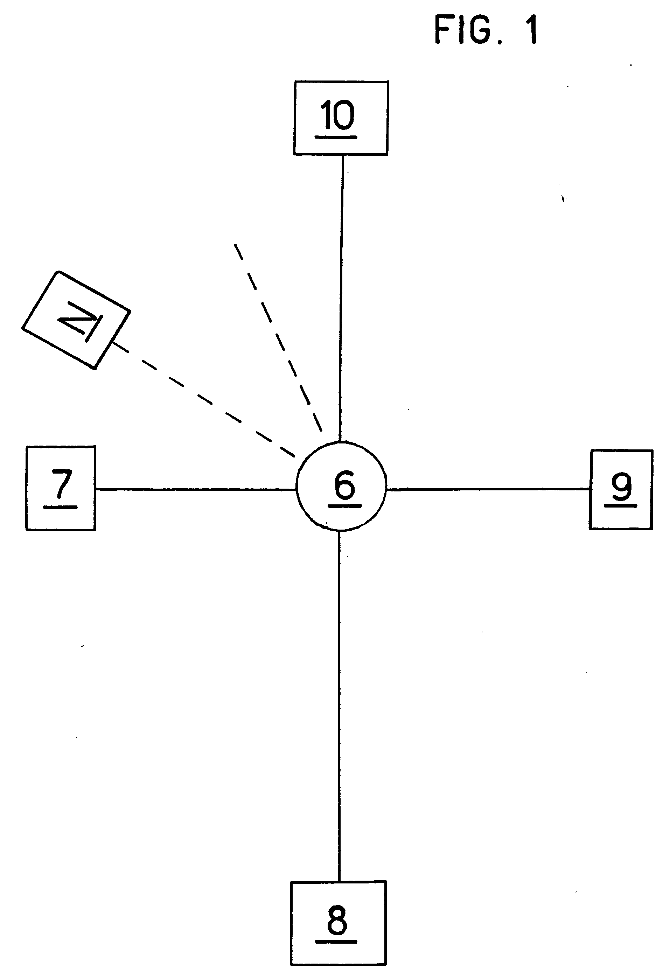

- in Fig.1 a UCOL network is schematically illustrated; and

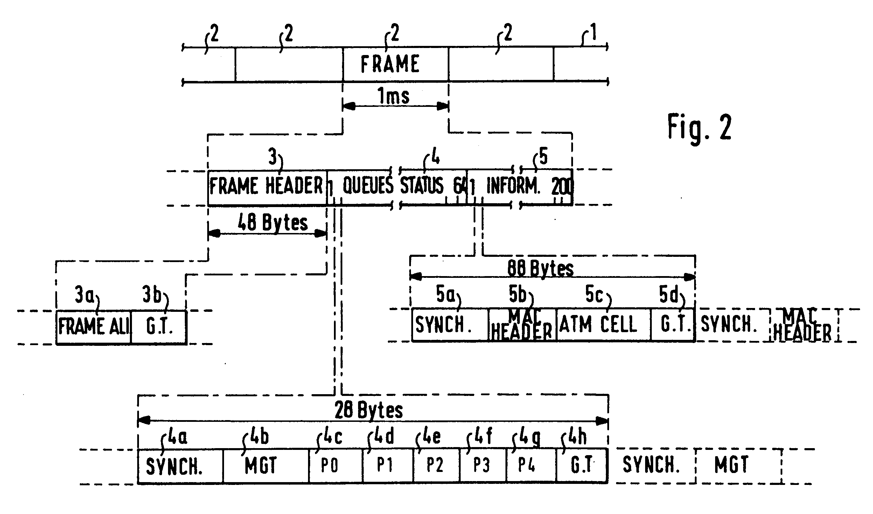

- in Fig.2 there is illustrated the frame structure of the access protocol of the UCOL transmission network, according to the present invention.

First of all it is a good thing to state beforehand that generally a UCOL network is to be considered as a multichannel network,thereby the access protocol described hereinafter is referred only to one channel,but what has been stated can be implemented on all others.

The ideal situation for a UCOL network is the one in which there is a continuous data flow, controlled by the access protocol from the stations 7,8,9,10...N to the star-center 6 without these data packets colliding each other thus generating an unintelligibility of their contents.

The access protocol,according to the present invention,provides for the subdivision of each channel 1 into frames 2.

First of all, an optimal repetition time of each single frame,fixed in one millisecond,i.e. each frame repeats at each millisecond in the transmission channel, is established. The frame 2, according such an access protocol, is then shared out,in this istance,into three parts. More particularly, into a first part 3 individuating basically an information related to frame beginning; into a part 4 characterizing essentially an information about the status of data access queues from the various stations; as well as into a part 5 related to data informative contents from the various stations.

Each of these parts is, in turn,subdivided into sections having a well defined quantity of bytes.

The part 3 of the beginning of frame,specifically, comprises 48 bytes and is subdivided in two sections 3a and 3b. The section 3a contains the information related to frame beginning.The section 3 contains a field called GUARD TIME related to a time approximately evaluated as 50 nanoseconds which provides for measurement errors related to a time information concerning the measurement of distance between a station and the star center 6,of which an exhaustive explanation will be given hereinafter,in order to avoid collision among the data blocks.

In part 4 of frame 2,related to queues status, are a first section 4a,relative to the synchronization of data flow from the stations,which acts for discriminating several blocks transmitting in synchronism; a section 4b, called MGT (MANAGEMENT), which is an additional section whose information acts for providing new communication channels for distributed networks upon new requests from management of the network itself.

In part 4 are then five more sections 4c, 4d, 4e, 4f, 4g, which, indicated in figure by Po to P4, represent five priority classes related to access priority for data coming from the stations to the star center, used for selecting data access of a station with respect to the others, as a function of transmission priority, i.e. of wait time. All this to conform the synchronous traffic treatment modes to the packet traffic treatment mode, but considering that the synchronous traffic has a higher priority with respect to packet traffic.All the above mentioned traffics are thus managed by informations related to corresponding priority classes.

Normally, the higher priority class is that one having the lower number,i.e. class O represents the highest priority. Morevoer, class O is exclusively reserved for synchronous traffic,while the other ones are reserved for further priorities. Each priority class has two bytes for quantizing the priority intrinsic value and which in any case represents,as priority class, a number proportional to the maximum time the information transmitted by a station, meant as data quantity,must wait before its transmission. Normally, this time decreases as the wait time increases and, when it reaches the maximum priority and is not transmitted, the packet is abandoned.

In part 4 according to access queues status in the frame,it is decided which of the packets must be transmitted with the subsequent frame.

Now ,since in the present case the maximun foreseen number of stations is better to be 64, in such part there are 64 subparts,each structured as part 4 just described from 4a to 4h.

Also in part 4,at the end of the five priority classes,there is a GUARD TIME field,in that case indicated by 4h,having the same purposes of the previous one,namely 3b.

Each of the 64 subparts of part 4, configured as hereinbefore described, contains totally 28 bytes.

For the synchronization,16 bytes are needed,while for section 4b,2 bytes are needed; on the contrary,for each priority class,2 bytes are necessary.

Finally,the part 5 related to informations is also structured in various sections: one,5a,for synchronism,as said in section 4a, another one containing an information characterizing both the source and the destination of the informative contents and the information beginning, and is indicated by 5b,and,in the end,there is the cell information,indicated by 5c, still closed by GUARD TIME field 5d. The whole part 5 can contain 200 subparts, each structured in the same manner as part 5,from 5a to 5d,just illustrated and provided with 88 bytes for each of 200 subparts.

Of these 88, 16 bytes are used for synchronization, 3 bytes for identifying the terminal station and for having a spare for eventual applications not foreseen and, of the remaining bytes, 64 are used for the real information, also in conformity with the rules nowadays in use, and five for providing a further beginning of real intrinsic informative part.

Obviously, several informations pertaining to more than one of such 200 subparts,can be grouped together so as to provide a single informative concept.

After each frame has been prepared and after each station is enabled to send its informations, the entire network will have its map of informative cells wherein each station will have priorities characterized by priority classes 4c to 4g.

All this occurs upon initialization of each station with an own time information depending upon its distance from the star center.

Indeeed,each station sends initially an own signal toward the star center,waiting its return.In this way it is possible for each station to get the initialization time information, which value corresponds with the distance of the station from the star center. In substance, said time information characterizes an advance time for the transmission of data informative contents,which time begins when allowed by the synchronism information and the priority class and lasts for a period corresponding exactly to propagation delay of the information along the link optical channel and depends on the effective measured distance between the station and the star center.

The bytes present in the various sections of the various parts 3,4,5 provide a data set which,travelling along channel 1, allow to avoid collisions among data coming from the various stations,optimize the channel sharing trough the one millisecond time,and allow to provide an information on the status of accesses through queues status 4.

Moreover,cell transmissions can also be sent,as just mentioned,both in case of synchronous traffic and packet traffic.

Such a protocol structure for network access can be easily implemented because it can be subdivided into further frame shares without any difficulty.Besides, the frame structure is particularly simple and does not imply any complication neither of bytes or further subparts burden.

The basic concepts of the network subject of the present invention can be summarized,on the one hand, in the initialization of stations according to their distance from the star center and,on the other hand, in the frame sharing into three parts 3,4,5, which provide together a plurality of characteristic informations,the access queues status, as well as the possibility of cell transmission,which make such type of protocol specific for UCOL networks. Indeed, such networks have the particular star topology, as well as particular technical aspects such as distance and station number parameters, and the aforementioned services such as, inter alia, the possibility of managing simultaneously, on the same channel, both the synchronous traffic and the packet traffic.

Relatively to the UCOL network described in the present invention, the number of usable optical channels has been fixed equal to 24.

It must be specified that the maximum number of stations linkable to the star center via optical channels should never exceed thirty kilometers,since such parameters should largely influence the network performances.

## Claims

1. Method of transmitting data over an optical star network of the type comprising a passive star center and a plurality of stations each connected thereto via at least two optical fibers, through the use of one protocol based on a fixed and predetermined frame structure (2), said stations not exceeding in number a predetermined limit, such data being due to traffic between said stations, and said frame structure comprising:
a) a first part (3) basically containing information related to frame beginning,
b) a second part (4) subdivided into a number of subparts equal to said predetermined limit each of which basically containing information corresponding to the status and the priority of an access queue of a different station,
c) a third part (5) basically containing the informative content of such data;
characterized in that said traffic is of a predetermined number of different kinds, e.g. synchronous and asynchronous, and in that, in said second part (4), such information correspond further to the status and the priority of a number of access queues (P0 - P4) in each station.

2. Method according to claim 1 in which, in said second part (4), the overall number of access queues is equal to said predetermined number of different kinds of traffic.

3. Method according to claim 1 in which said third part (5) is subdivided into a plurality of subparts, each of which basically containing a data packet, particularly an ATM cell.

4. Method according to claim 3 in which each subpart of said third part (5) further contains information related to the source and the destination of the corresponding data packet.

5. Method according to claim 1 in which each optical fiber provides a plurality of transmission channels, and in which each subpart of said second part (4) further contains a section (4b) for managing a plurality of transmission channels.

6. Method according to claim 1 or 3 in which the subparts of said second part (4) and said third part (5) further contain, at the beginning, a first section (SYNCH.) for synchronization of data flow, and, at the end, a final section (G.T.) for taking into account the propagation delay between said stations and said center.

7. Station for an optical star network of the type comprising a passive star center (6) and a plurality of stations (7,8,9,10,N) each connected thereto via at least two optical fibers, said stations not exceeding in number a predetermined limit, having means for receiving data from one of said two optical fibers, means for transmitting data over the other of said two optical fibers, and means for managing an own access queue and a relevant priority indicator, such data being due to traffic between said stations, such transmitting means being adapted to transmit data according to one protocol based on a fixed and predetermined frame structure (2) comprising:
a) a first part (3) basically containing information related to frame beginning,
b) a second part (4) subdivided into a number of subparts equal to said predetermined limit each of which basically containing information corresponding to the status and the priority of an access queue of a different station,
c) a third part (5) basically containing the informative content of such data;
characterized in that said traffic is of a predetermined number of different kinds, e.g. synchronous and asynchronous, and in that said managing means are adapted to manage further a number of own access queues and relevant priority indicators, and in that, in said second part (4), such information correspond further to the status and the priority of said number of access queues.

8. Optical star network of the type comprising a passive star center (6) and a plurality of stations (7,8,9,10,N) each connected thereto via at least two optical fibers, said stations not exceeding in number a predetermined limit, and being of the type having means for receiving data from one of said two optical fibers, means of transmitting data over the other of said two optical fibers, and means for managing an own access queue and a relevant priority indicator, such data being due to traffic between said stations, such transmitting means being adapted to transmit data according to one protocol based on a fixed and predetermined frame structure (2) comprising:
a) a first part (3) basically containing information related to frame beginning,
b) a second part (4) subdivided into a number of subparts equal to said predetermined limit each of which basically containing information corresponding to the status and the priority of an access queue of a different station,
c) a third part (5) basically containing the informative content of such data;
characterized in that said traffic is of a predetermined number of different kinds, e.g. synchronous and asynchronous, and in that said managing means of said stations (7,8,9,10,N) are adapted to manage further a number of own access queues and relevant priority indicators, and in that, in said second part (4) of the frame structure of said protocol, such information correspond further to the status and the priority of said number of access queues.

## Patentansprüche

1. Verfahren zum Übertragen von Daten über ein optisches Sternnetz, das ein passives Sternzentrum und eine Vielzahl von Stationen aufweist, die jeweils über wenigstens zwei optische Fasern an das Sternzentrum angeschlossen sind, mittels eines Protokolls, das sich auf eine feste und vorherbestimmte Rahmenstruktur (2) stützt, wobei die Anzahl der Stationen einen vorgegebenen Höchstwert nicht übersteigt, wobei solche Daten anfallen, wenn die Stationen miteinander kommunizieren und wobei die Rahmenstruktur aufweist:
a) einen ersten Teil (3), der im Grunde Information bezüglich des Rahmenanfangs enthält,
b) einen zweiten Teil (4), der in eine Anzahl von Abschnitten unterteilt ist, die gleich dem vorgegebenen Höchstwert ist, wobei jeder Abschnitt im Grunde Information betreffend den Status und die Priorität einer Zugangsschlange einer anderen Station enthält,
c) einen dritten Teil (5), der im Grunde den Nutzinhalt solcher Daten enthält;
**dadurch gekennzeichnet**, daß die Stationen in einer vorbestimmten Anzahl verschiedener Verkehrsarten, z.B. synchron und asynchron, miteinander kommunizieren und daß in dem zweiten Teil (4) die Information weiter den Status und die Priorität einer Reihe von Zugangsschlangen (P0 - P4) in jeder Station betrifft.

2. Verfahren nach Anspruch 1, bei dem im zweiten Teil (4) die Gesamtzahl von Zugangsschlangen gleich der vorbestimmten Anzahl verschiedener Verkehrsarten ist.

3. Verfahren nach Anspruch 1, bei dem der dritte Teil (5) in eine Vielzahl von Abschnitten unterteilt ist, von denen jedes im Grunde ein Datenpaket enthält, insbesondere eine ATM-Zelle.

4. Verfahren nach Anspruch 3, bei dem jeder Abschnitt des dritten Teils (5) außerdem Information enthält, die die Quelle und das Ziel des entsprechenden Datenpakets betrifft.

5. Verfahren nach Anspruch 1, bei dem jede optische Faser eine Vielzahl von Übertragungskanälen ermöglicht, und bei dem jeder Abschnitt des zweiten Teils (4) außerdem einen Unterabschnitt (4b) zur Verwaltung einer Vielzahl von Übertragungskanälen aufweist.

6. Verfahren nach Anspruch 1 oder 3, bei dem die Abschnitte des zweiten Teils (4) und des dritten Teils (5) außerdem am Anfang einen ersten Unterabschnitt (SYNCH.) zur Synchronisation des Datenflusses aufweisen und am Ende einen abschließenden Unterabschnitt (G.T.), um die Verzögerungszeit zwischen den Stationen und dem Zentrum zu berücksichtigen.

7. Station für ein optisches Sternnetz, das ein passives Sternzentrum (6) und eine Vielzahl von Stationen (7, 8, 9, 10, N) aufweist, die jeweils über wenigstens zwei optische Fasern an das Sternzentrum angeschlossen sind, wobei die Anzahl der Stationen einen vorgegebenen Höchstwert nicht übersteigt, wobei die Station Mittel aufweist, um Daten von einer dieser zwei optischen Fasern zu empfangen, Mittel, um Daten über die andere der zwei optischen Fasern zu senden und Mittel, um eine eigene Zugangsschlange und einen zugehörigen Prioritätsanzeiger zu verwalten, wobei solche Daten anfallen, wenn die Stationen miteinander kommunizieren, und wobei die Mittel zum Senden so ausgestaltet sind, daß sie die Daten gemäß einem Protokoll senden, das auf einer festen und vorbestimmten Rahmenstruktur aufbaut, die aufweist:
a) einen ersten Teil (3), der im Grunde Information bezüglich des Rahmenanfangs enthält,
b) einen zweiten Teil (4), der in eine Anzahl von Abschnitten unterteilt ist, die gleich dem vorgegebenen Höchstwert ist, wobei jeder Abschnitt im Grunde Information betreffend den Status und die Priorität einer Zugangsschlange einer anderen Station enthält,
c) einen dritten Teil (5), der im Grunde den Nutzinhalt solcher Daten enthält;
**dadurch gekennzeichnet**, daß die Stationen in einer vorbestimmten Anzahl verschiedener Verkehrsarten, z.B. synchron und asynchron, miteinander kommunizieren und daß die Mittel zum Verwalten so ausgestaltet sind, daß sie außerdem eine Reihe eigener Zugangsschlangen und zugehöriger Prioritätsanzeiger verwalten und daß in dem zweiten Teil (4) die Information weiter den Status und die Priorität dieser Reihe von Zugangsschlangen betrifft.

8. Optisches Sternnetz, das ein passives Sternzentrum (6) und eine Vielzahl von Stationen (7, 8, 9, 10, N) aufweist, die jeweils über wenigstens zwei optische Fasern an das Sternzentrum angeschlossen sind, wobei die Anzahl der Stationen einen vorgegebenen Höchstwert nicht übersteigt, wobei die Stationen Mittel aufweisen, um Daten von einer dieser zwei optischen Fasern zu empfangen, Mittel, um Daten über die andere der zwei optischen Fasern zu senden und Mittel, um eine eigene Zugangsschlange und einen zugehörigen Prioritätsanzeiger zu verwalten, wobei solche Daten anfallen, wenn die Stationen miteinander kommunizieren, und wobei die Mittel zum Senden so ausgestaltet sind, daß sie die Daten gemäß einem Protokoll senden, das auf einer festen und vorbestimmten Rahmenstruktur aufbaut, die aufweist:
a) einen ersten Teil (3), der im Grunde Information bezüglich des Rahmenanfangs enthält,
b) einen zweiten Teil (4), der in eine Anzahl von Abschnitten unterteilt ist, die gleich dem vorgegebenen Höchstwert ist, wobei jeder Abschnitt im Grunde Information betreffend den Status und die Priorität einer Zugangsschlange einer anderen Station enthält,
c) einen dritten Teil (5), der im Grunde den Nutzinhalt solcher Daten enthält;
**dadurch gekennzeichnet**, daß die Stationen in einer vorbestimmten Anzahl verschiedener Verkehrsarten, z.B. synchron und asynchron, miteinander kommunizieren und daß in diesen Stationen (7, 8, 9, 10, N) die Mittel zum Verwalten so ausgestaltet sind, daß sie außerdem eine Reihe eigener Zugangsschlangen und zugehöriger Prioritätsanzeiger verwalten und daß in dem zweiten Teil (4) der Rahmenstruktur dieses Protokolls die Information weiter den Status und die Priorität dieser Reihe von Zugangsschlangen betrifft.

## Revendications

1. Procédé de transmission de données sur un réseau optique en étoile du type comportant un centre d'étoile passif et une pluralité de stations qui lui sont, chacune, reliées par l'intermédiaire d'au moins deux fibres optiques, grâce à l'emploi d'un protocole basé sur une structure de trame fixe et prédéterminée (2), lesdites stations ne dépassant pas, en nombre, une limite prédéterminée, ces données provenant du trafic entre lesdites stations, et ladite structure de trame comportant :
a) une première partie (3) contenant en principe une information concernant le début de la trame,
b) une seconde partie (4) subdivisée en un nombre de sous-parties égal à ladite limite prédéterminée, dont chacune contient en principe une information correspondant au statut et à la priorité d'une file d'attente d'accès d'une station différente,
c) une troisième partie (5) contenant en principe le contenu informatif de ces données ;
caractérisé par le fait que ledit trafic est d'un nombre prédéterminé de types différents, par exemple synchrone et asynchrone et que, dans ladite seconde partie (4), cette information correspond en outre au statut et à la priorité d'un certain nombre de files d'attente d'accès (P0-P4) dans chaque station.

2. Procédé selon la revendication 1 dans lequel, dans ladite seconde partie (4), le nombre total de files d'attente d'accès est égal audit nombre prédéterminé de types différents de trafic.

3. Procédé selon la revendication 1 dans lequel ladite troisième partie (5) est subdivisée en une pluralité de sous-parties, dont chacune contient en principe un paquet de données, en particulier une cellule en mode transfert asynchrone ATM.

4. Procédé selon la revendication 3 dans lequel chaque sous-partie de ladite troisième partie (5) contient en outre une information relative à la source et à la destination du paquet de données correspondant.

5. Procédé selon la revendication 1 dans lequel chaque fibre optique fournit une pluralité de voies de transmission et dans lequel chaque sous-partie de ladite seconde partie (4) contient en outre une section (4b) pour gérer une pluralité de voies de transmission.

6. Procédé selon la revendication 1 ou 3 dans lequel les sous-parties de ladite seconde partie (4) et de ladite troisième partie (5) contiennent en outre, au début, une première section (SYNCH.) pour la synchronisation du flux de données et, à la fin, une section finale (G.T./temps de garde) pour prendre en compte le délai de propagation entre lesdites stations et ledit centre.

7. Station pour un réseau optique en étoile du type comportant un centre d'étoile passif (6) et une pluralité de stations (7, 8, 9, 10, N) qui lui sont reliées par l'intermédiaire d'au moins deux fibres optiques, lesdites stations ne dépassant pas en nombre une limite prédéterminée, comportant des moyens pour recevoir des données en provenance de l'une des deux dites fibres optiques, des moyens pour transmettre des données sur l'autre des deux dites fibres optiques, et des moyens pour gérer une propre file d'attente d'accès et un indicateur de priorité correspondant, ces données provenant du trafic entre lesdites stations, ces moyens de transmission étant conçus pour transmettre des données conformément à un protocole basé sur une structure de trame fixe et prédéterminée (2) comportant :
a) une première partie (3) contenant en principe une information concernant le début de la trame,
b) une seconde partie (4) subdivisée en un nombre de sous-parties égal à ladite limite prédéterminée, dont chacune contient en principe une information correspondant au statut et à la priorité d'une file d'attente d'accès d'une station différente,
c) une troisième partie (5) contenant en principe le contenu informatif de ces données ;
caractérisé par le fait que ledit trafic est d'un nombre prédéterminé de types différents, par exemple synchrone et asynchrone, et par le fait que lesdits moyens de gestion sont conçus pour gérer en outre un certain nombre de propres files d'attente d'accès et d'indicateurs de priorité correspondants et par le fait que dans ladite seconde partie (4), cette information correspond en outre au statut et à la priorité dudit nombre de files d'attente d'accès.

8. Réseau optique en étoile du type comportant un centre d'étoile passif (6) et une pluralité de stations (7, 8, 9, 10, N) qui lui sont reliées par l'intermédiaire d'au moins deux fibres optiques, lesdites stations ne dépassant pas en nombre une limite prédéterminée, et étant du type comportant des moyens pour recevoir des données en provenance de l'une des deux dites fibres optiques, des moyens pour transmettre des données sur l'autre des deux dites fibres optiques, et des moyens pour gérer une propre file d'attente d'accès et un indicateur de priorité correspondant, ces données provenant du trafic entre lesdites stations, ces moyens de transmission étant conçus pour transmettre des données conformément à un protocole basé sur une structure de trame fixe et prédéterminée (2) comportant :
a) une première partie (3) contenant en principe une information concernant le début de la trame,
b) une seconde partie (4) subdivisée en un nombre de sous-parties égal à ladite limite prédéterminée, dont chacune contient en principe une information correspondant au statut et à la priorité d'une file d'attente d'accès d'une station différente,
c) une troisième partie (5) contenant en principe le contenu informatif de ces données ;
caractérisé par le fait que ledit trafic est d'un nombre prédéterminé de types différents, par exemple synchrone et asynchrone, et par le fait que lesdits moyens de gestion desdites stations (7, 8, 9, 10, N) sont conçus pour gérer en outre un certain nombre de propres files d'attente d'accès et d'indicateurs de priorité correspondants et par le fait que, dans ladite seconde partie (4) de la structure de trame dudit protocole, cette information correspond en outre au statut et à la priorité dudit nombre de files d'attente d'accès.
